# EUROPEAN PATENT APPLICATION

(11) **EP 4 582 948 A1**
(43) Date of publication of application: **09.07.2025**
(21) Application number: 25150788.5
(22) Date of filing: 08.01.2025
(51) Int. Cl.: G06F 9/50

(54) **ORCHESTRATOR FOR OPTIMIZING HPC COMPUTING JOB ALLOCATION**

(30) Priority: 08.01.2024 US 202418406442
(71) Applicant: RTX Corporation, Farmington, CT 06032 (US)
(72) Inventor: KNAPP, Adam F., Farmington, 06032 (US); BRADLEY, Peter C., Farmington, 06032 (US); CARRICO, Jeff M., Farmington, 06032 (US)
(74) Representative: Dehns

(57) **Abstract**

A computer-implemented method for high-performance computing (HPC) includes receiving (62), from a user (13), a computing job request (16) that includes or describes input data required for performing a computing job, and includes an urgency request for the computing job. The method also includes determining (66), for a plurality of HPC environments, which includes an in-house HPC environment (18) associated with the user and a plurality of third-party HPC environments (20A-N), an extent to which the plurality of HPC environments can perform the computing job and fulfill the urgency request. The method also includes, based on the determining, presenting (68) to the user a summary (30) of a cost (34) and availability (36) of each of the plurality of HPC environments for performance of the computing job according to the urgency request; receiving (70) a selection of one of the plurality of HPC environments from the user based on the summary; and allocating (72) the computing job to the selected HPC environment. A computing device (100) is also disclosed.

## Description

### BACKGROUND

This application relates to high-performance computing (HPC).

HPC environments include clusters of servers, potentially on the order of hundreds of servers, that are networked together to solve large analysis problems. Currently, users of HPC environments must decide the technical details of when and where their job runs. Also, users increasingly have more service provider choices for these runs. Previously, users could only choose to run their job on-premises in an HPC queue. Today, those users can run jobs on-premises in multiple queues or run it with multiple cloud providers with varying compute capacity. Moreover, the cost of those cloud providers can change by the minute and, if the user is willing to wait, the cost may fall in the near future, as prices are known to fluctuate based on demand. This presents challenges for users to select an optimal HPC environment for their HPC computing jobs.

### SUMMARY

According to a first aspect of the invention there is provided a computer-implemented method for high-performance computing (HPC) according to an example embodiment of the present disclosure includes receiving, from a user, a computing job request that includes or describes input data required for performing a computing job, and includes an urgency request for the computing job. The method also includes determining, for a plurality of HPC environments, which includes an in-house HPC environment associated with the user and a plurality of third-party HPC environments, an extent to which the plurality of HPC environments can perform the computing job and fulfill the urgency request. The method also includes, based on the determining, presenting to the user a summary of a cost and availability of each of the plurality of HPC environments for performance of the computing job according to the urgency request; receiving a selection of one of the plurality of HPC environments from the user based on the summary; and allocating the computing job to the selected HPC environment.

Optionally, the determining and presenting are performed based on the in-house HPC environment not having sufficient computing capacity available to complete the computing job and fulfill the urgency request. The method may include, based on the in-house HPC environment having sufficient computing capacity available to complete the computing job and fulfill the urgency request, automatically allocating the computing job to the in-house HPC environment.

Optionally, the determining includes polling the plurality of HPC environments to determine pricing and availability of the plurality of HPC environments, and the summary includes a ranking of the plurality of HPC environments based on an extent to which the plurality of HPC environments can complete the computing job according to the urgency request and based on cost.

Optionally, the method includes determining a set of computing resources required for performing the computing job, which includes receiving a description of the set of computing resources required for the computing job as part of the computing job request. The method may also include determining the summary based on the determined set of computer resources required.

Optionally, the method also includes determining a set of computing resources required for performing computing job, which includes estimating the set of computing resources required for the computing job based on the computing job request. The method may also include determining the summary based on the estimated set of computer resources required.

Optionally, the computing job request includes one or more of: a number of computing cores needed for the computing job, a type of computing core needed for the computing job, an amount of memory needed for the computing job, an estimated length of the computing job, an amount of data storage needed for the computing job, and an amount data transfer needed for uploading the input data to the HPC environment and for downloading output data of the computing job from the HPC environment.

Optionally, the computing job request includes a data locality requirement indicating one or more geographic restrictions on transfer of data associated with the computing job. The method may include, based on the data locality requirement, excluding an HPC environment that is unable to comply with the data locality requirement from the summary.

Optionally, the summary includes a plurality of configurations for at least one of the third-party HPC environments that vary in terms of estimated completion date.

Optionally, the method includes utilizing a machine learning algorithm trained with historical data of computing jobs performed by one of the plurality of HPC environments to predict future availability of computing resources at the one of the plurality of HPC environments.

Optionally, for each of at least one of the plurality of HPC environments that can perform the computing job but cannot also fulfill the urgency request, the summary includes a best effort option for the HPC environment that indicates an earliest time the computing job could be completed by the HPC environment.

According to a second aspect of the invention there is provided a computing device according to an example embodiment of the present disclosure includes processing circuitry operatively connected to memory and configured to receive, from a user, a computing job request that includes or describes input data required for performing a computing job, and includes an urgency request for the computing job. The processing circuitry is also configured to determine, for a plurality of HPC environments, which includes an in-house HPC environment associated with the user and a plurality of third-party HPC environments, an extent to which the plurality of HPC environments can perform the computing job and fulfill the urgency request. The processing circuitry is also configured to, based on the determination, present to the user a summary of a cost and availability of each of the plurality of HPC environments for performance of the computing job according to the urgency request. The processing circuitry is also configured to receive a selection of one of the plurality of HPC environments from the user based on the summary and allocate the computing job to the selected HPC environment.

Optionally, the processing circuitry is configured to perform the determination and the presentation of the summary based on the in-house HPC environment not having sufficient computing capacity available to complete the computing job and fulfill the urgency request. The processing circuitry may also be configured to, based on the in-house HPC environment having sufficient computing capacity available to complete the computing job and fulfill the urgency request, automatically allocate the computing job to the in-house HPC environment.

Optionally, to determine the extent to which the plurality of HPC environments can perform the computing job and fulfill the urgency request, the processing circuitry is configured to poll the plurality of HPC environments. The summary may include a ranking of the plurality of HPC environments based on an extent to which the plurality of HPC environments can complete the computing job according to the urgency request and based on cost.

Optionally, the processing circuitry is configured to determine a set of computing resources required for performing the computing job, which includes receiving a description of the set of computing resources required for the computing job as part of the computing job request. The processing circuitry may be configured to determine the summary based on the determined set of computer resources required.

Optionally, the processing circuitry is configured to determine a set of computing resources required for performing the computing job, which includes estimating the set of computing resources required for the computing job based on the computing job request. The processing circuitry may be configured to determine the summary based on the estimated set of computer resources required.

Optionally, the computing job request includes one or more of a number of computing cores needed for the computing job, a type of computing core needed for the computing job, an amount of memory needed for the computing job, an estimated length of the computing job, an amount of data storage needed for the computing job, and an amount data transfer needed for uploading the input data to the HPC environment and for downloading output data of the computing job from the HPC environment.

Optionally, the computing job request includes a data locality requirement indicating one or more geographic restrictions on transfer of data associated with the computing job. The processing circuitry may be configured to, based on the data locality requirement, exclude an HPC environment that is unable to comply with the data locality requirement from the summary.

Optionally, the summary includes a plurality of configurations for at least one of the third-party HPC environments that vary in terms of estimated completion date.

Optionally, the processing circuitry is configured to utilize a machine learning algorithm trained with historical data of computing jobs performed by one of the plurality of HPC environments to predict future availability of computing resources at the one of the plurality of HPC environments.

Optionally, for each of at least one of the plurality of HPC environments that can perform the computing job but cannot also fulfill the urgency request, the summary includes a best effort option for the HPC environment that indicates an earliest time the computing job could be completed by the HPC environment.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Certain exemplary embodiments will now be described in greater detail by way of example only and with reference to the accompanying drawings in which:
Figure 1 is a schematic view of an example high-performance computing (HPC) system.
Figure 2 is a schematic view of an example payload description.
Figure 3 is a flowchart of an example method for HPC.
Figure 4 is a schematic view of an example computing device that may be used in the HPC system of Figure 1.

### DETAILED DESCRIPTION

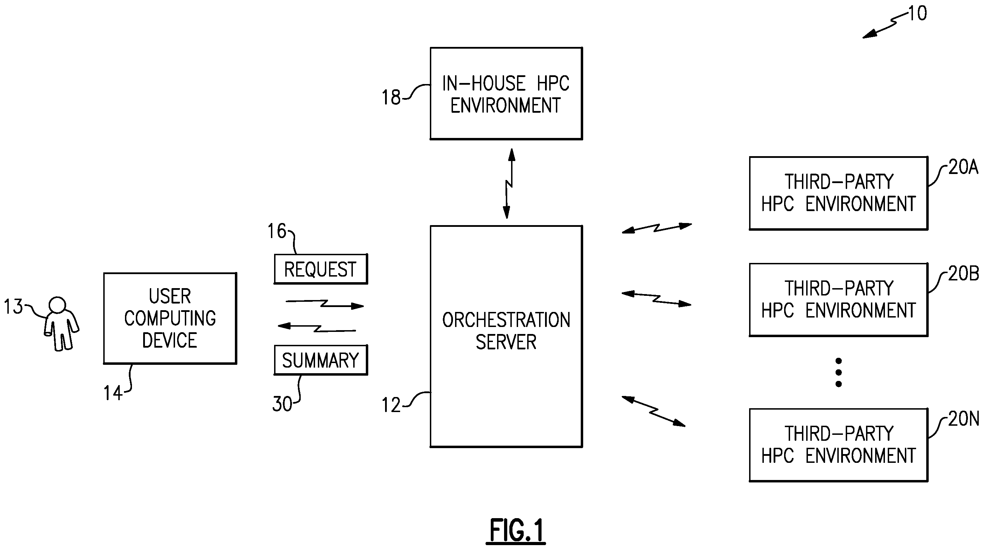

Figure 1 is a schematic view of an example HPC system 10 that includes an orchestration server 12 operable to interact with an in-house HPC environment 18 and a plurality of third party HPC environments 20A-N. A user 13 utilizes a user computing device 14 to submit a computing job request 16 (e.g., via an application programming interface (API) call) to the orchestration server 12. The in-house HPC environment 18 is associated with the user 13 (e.g., the in-house HPC environment is on the work premises of the user 13 and/or is provided by an employer of the user 13 or a school in which the user 13 is enrolled). Although three third-party HPC environments 20A-N are illustrated in Figure 1, it is understood that this is a non-limiting example, and that other quantities could be used.

The computing job request 16 includes or describes input data required for performing a computing job and describes what computing operations are being requested (e.g., the request 16 includes or describes what program(s) or script(s) should be executed on what input data set and/or indicates where those items can be download). The description may include, for example, a link to the input data and/or a description of a size of the input data. The input data may include one or more computer models to be processed, for example.

The computing job request 16 also includes an urgency request for the computing job that indicates a desired processing time for the computing job (e.g., as a requested completion date and/or requested completion time).

In one or more embodiments, the computing job request 16 also includes one or any combination of the following:
- a number and/or type (e.g., CPU or GPU) of computing cores needed for the computing job;
   - an amount of memory needed for the computing job;
   - an estimated length of the computing job;
   - an amount of data storage needed for the computing job; and
- an amount data transfer needed for uploading the input data to the HPC environment and/or for downloading output data of the computing job from the HPC environment.

The orchestration server 12 determines a set of computing resources required for performing the computing job described in the request 16. In one or more embodiments, this is determined based on one or more of: a description provided in the computing job request 16, or the orchestration server 12 estimating the amount of computing resources required for performing the computing job based on the computing job request 16.

The orchestration server 12 determines, for a plurality of HPC environments, including the in-house HPC environment 18 and the plurality of third-party HPC environments 20A-N, an extent to which the plurality of HPC environments can perform the computing job request and fulfill the urgency request. This may include polling the plurality of HPS environments, for example. Based on the determining, the orchestration server 12 presents to the user 13 a summary 30 of the cost and availability of each of the plurality of HPC environments for performance of the computing job according to the urgency request. The user 13 selects one of the plurality of HPC environments, and the orchestration server 12 then allocates the computing job to the selected HPC environment.

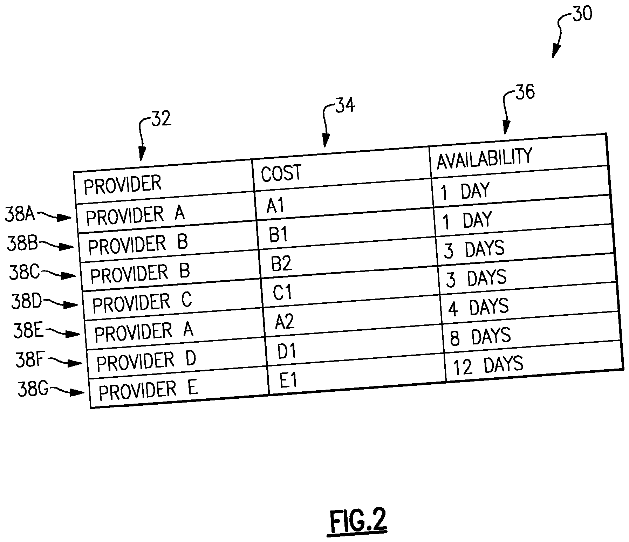

Figure 2 is a schematic view of an example summary 30 of the cost and availability of each of the plurality of HPC environments that presents a plurality of results 38A-G that are ranked based on an extent to which the plurality of HPC environments can complete the computing job according to the urgency request and based on cost. In the example of Figure 2, the results are ranked descending order according to cost and availability (with result 38A having a highest rank and result 38G having a lowest rank). Provider E may correspond to in-house HPC environment 18, for example.

In the example of Figure 2, for each result 38, the summary includes a provider 32 that describes an HPC environment provider, a cost 34 that describes a cost per core hour, and an availability 36 that describes how many days the job would take. The results in Figure 2 are ranked according to cost and availability. Assume for the discussion below that the costs can be described in the following manner E1 < A2 < B2 < A1 < C1 < B1 < D1.

Assume also that the requested urgency is one day. This causes results 38A-B to be provided first, even though the cost of some other providers is lower per core hour (e.g., results 38E (price A2) and 38G (price E1)).

In one or more embodiments, the computing job request 16 indicates the relative importance of cost vs. urgency in the form of a weighting and/or the user 13 indicates whether they have flexibility in the urgency (e.g., 1 day preferred, but 2-5 days acceptable), and these factor(s) are taken into account by the orchestration server 12 when providing the summary 30. If cost is weighted higher than availability, for example, then a lower cost result that is slower may be ranked higher than a more expensive result that is faster (e.g., result 38G higher than result 38A).

The example summary 30 of Figure 2 includes a plurality of results for Provider A (results 38A and 38E) and for Provider B (results 38B, 38C) that vary in terms of estimated completion date. This may be due to tiered pricing from the provider due to pricing premiums placed on more urgent jobs and/or may be due to utilization of fewer computing resources for the less expensive results.

Assume in one example that the indicated urgency of the request 16 is two days. Provider C and Provider E can perform the requested computing job but cannot do so while fulfilling the urgency request. Therefore, for these providers, the orchestration server 12 provides results 38D and 38F as a "best effort" option that indicates an earliest time the computing job could be completed by those HPC environment providers.

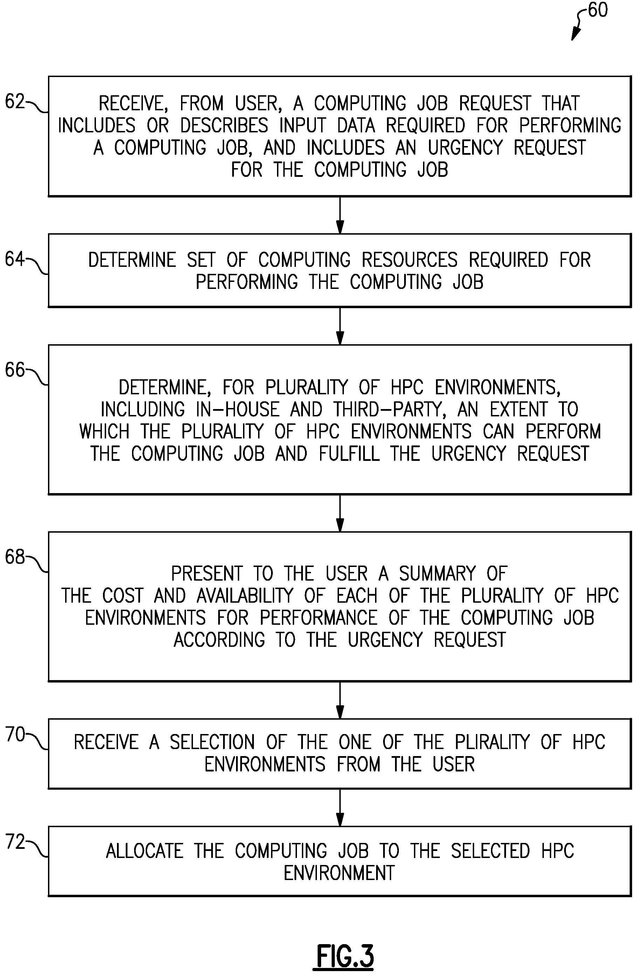

Figure 3 is a flowchart of an example computer-implemented method 60 for the HPC system 10 that is implemented by the orchestration server 12 of Figure 1. The orchestration server 12 receives, from the user computing device 14 of user 13 (e.g., an API), the computing job request 16 that includes or describes input data required for performing a computing job, and includes an urgency request for the computing job (step 62).

The orchestration server 12 determines a set of computing resources required for performing the computing job (step 64). In one or more embodiments, the orchestration server 12 makes the determination by parsing the computing job request 16, which describes the resources required. In one or more further embodiments, the orchestration server 12 determines the set of computing resources required for performing the computing job by estimating the set of computing resources required for the computing job based on the nature computing job request (e.g., based on the nature of the computational operations being requested).

The orchestration server 12 determines, for a plurality of HPC environments (step 66), which includes the in-house HPC environment 18 associated with the user 13 and a plurality of third-party HPC environments 20A-N, an extent to which the plurality of HPC environments can perform the computing job and fulfill the urgency request. The determination may include polling each of the HPC environments, for example (which may be beneficial as prices can fluctuate frequently).

Based on the determining, the orchestration server 12 presents to the user 13 the computing device 30 of a cost and availability of each of the plurality of HPC environments for performance of the computing job according to the urgency request (step 68).

The orchestration server 12 receives a selection of one of the plurality of HPC environments from the user 13 based on the summary (step 70), and allocates the computing job to the selected HPC environment (step 72).

In one or more embodiments, the determining of step 66 and presenting of step 68 are performed based on the in-house HPC environment 18 not having sufficient computing capacity available to complete the computing job and fulfill the urgency request, and the method 60 includes, based on the in-house HPC environment 18 having sufficient computing capacity available to complete the computing job and fulfill the urgency request, automatically allocating the computing job to the in-house HPC environment 18.

In one or more embodiments, the computing job request 16 includes a data locality requirement indicating one or more geographic restrictions on transfer of data associated with the computing job (e.g., do not export data outside of the United States), and the method 60 includes, based on the data locality requirement, excluding from the summary 30 an HPC environment that is unable to comply with the data locality requirement (e.g., because it would use servers outside the United States).

In one or more embodiments, the orchestration server 12 utilizes a machine learning algorithm (e.g., a neural network) trained with historical data of computing jobs performed by one of the plurality of HPC environments to predict future availability and/or pricing of computing resources at the one of the plurality of HPC environments. Referring again to Figure 2, in one example the orchestration server 12 provides the additional result 38E for Provider A and the additional result 38C for Provider B by utilizing the machine learning algorithm to predict that the price will go down for those providers.

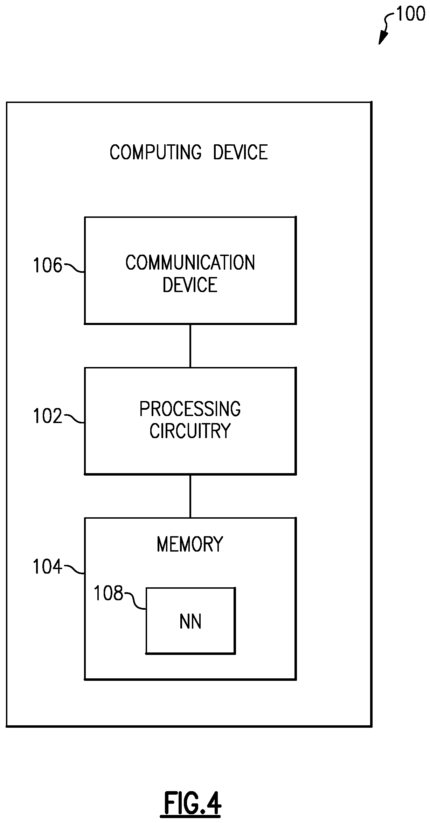

Figure 4 is a schematic view of an example computing device 100 that may be used for the orchestration server 12 and/or user computing device 14 of Figure 1. The computing device 100 includes processing circuitry 102 operatively connected to a memory 104 and a communication interface 106. The processing circuitry 102 may include one or more microprocessors, microcontrollers, application specific integrated circuits (ASICs), or the like, for example. The memory 104 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The memory 104 may store a machine learning algorithm (e.g., a neural network 108) as described above. The communication interface 106 is operable to communicate with external devices for sending and receiving data (e.g., wired or wireless communication).

Use of the orchestration server 12 described herein may simplify the process of submitting HPC computing jobs for users, improve maintainability by pointing various engineering workflows to a single tool (the orchestration server 12), reduce cost to run analyses (by facilitating the best options by users), and may significantly reduce the likelihood of vendor lock-in.

Although example embodiments have been disclosed, a worker of ordinary skill in this art would recognize that certain modifications would come within the scope of the invention as defined by the appended claims. For that reason, the following claims should be studied to determine the scope of protection.

## Claims

1. A computer-implemented method (60) for high-performance computing (HPC), comprising:
receiving (62), from a user (13), a computing job request (16) that includes or describes input data required for performing a computing job, and includes an urgency request for the computing job;
determining (66), for a plurality of HPC environments (20A-N), which includes an in-house HPC environment associated with the user and a plurality of third-party HPC environments, an extent to which the plurality of HPC environments can perform the computing job and fulfill the urgency request;
based on the determining, presenting (68) to the user a summary (30) of a cost (34) and availability (36) of each of the plurality of HPC environments for performance of the computing job according to the urgency request;
receiving (70) a selection of one of the plurality of HPC environments from the user based on the summary; and
allocating (72) the computing job to the selected HPC environment.

2. The computer-implemented method of claim 1, wherein:
said determining and presenting are performed based on the in-house HPC environment not having sufficient computing capacity available to complete the computing job and fulfill the urgency request; and
the method includes, based on the in-house HPC environment having sufficient computing capacity available to complete the computing job and fulfill the urgency request, automatically allocating the computing job to the in-house HPC environment.

3. The computer-implemented method of claim 1 or 2, wherein:
the determining includes polling the plurality of HPC environments to determine pricing and availability of the plurality of HPC environments; and
the summary includes a ranking of the plurality of HPC environments based on an extent to which the plurality of HPC environments can complete the computing job according to the urgency request and based on cost.

4. The computer-implemented method of any preceding claim, comprising:
determining (64) a set of computing resources required for performing the computing job, which includes receiving a description of the set of computing resources required for the computing job as part of the computing job request; and
determining the summary based on the determined set of computer resources required.

5. The computer-implemented method of any preceding claim, comprising:
determining a set of computing resources required for performing computing job, which includes estimating the set of computing resources required for the computing job based on the computing job request; and
determining the summary based on the estimated set of computer resources required.

6. The computer-implemented method of any preceding claim, wherein the computing job request includes one or more of the following:
a number of computing cores needed for the computing job;
a type of computing core needed for the computing job;
an amount of memory (104) needed for the computing job;
an estimated length of the computing job;
an amount of data storage needed for the computing job; and
an amount data transfer needed for uploading the input data to the HPC environment and for downloading output data of the computing job from the HPC environment.

7. The computer-implemented method of any preceding claim, wherein:
the computing job request includes a data locality requirement indicating one or more geographic restrictions on transfer of data associated with the computing job; and
the method includes, based on the data locality requirement, excluding an HPC environment that is unable to comply with the data locality requirement from the summary.

8. The computer-implemented method of any preceding claim, wherein the summary includes a plurality of configurations for at least one of the third-party HPC environments that vary in terms of estimated completion date.

9. The computer-implemented method of any preceding claim, comprising:
utilizing a machine learning algorithm trained with historical data of computing jobs performed by one of the plurality of HPC environments to predict future availability of computing resources at said one of the plurality of HPC environments.

10. The computer-implemented method of any preceding claim, wherein for each of at least one of the plurality of HPC environments that can perform the computing job but cannot also fulfill the urgency request, the summary includes a best effort option for the HPC environment that indicates an earliest time the computing job could be completed by the HPC environment.

11. A computing device (100) comprising:
processing circuitry (102) operatively connected to memory (104) and configured to:
receive, from a user (13), a computing job request (16) that includes or describes input data required for performing a computing job, and includes an urgency request for the computing job;
determine, for a plurality of HPC environments (20A-N), which includes an in-house HPC environment associated with the user and a plurality of third-party HPC environments, an extent to which the plurality of HPC environments can perform the computing job and fulfill the urgency request;
based on the determination, present to the user a summary (30) of a cost (34) and availability (36) of each of the plurality of HPC environments for performance of the computing job according to the urgency request;
receive a selection of one of the plurality of HPC environments from the user based on the summary; and
allocate the computing job to the selected HPC environment.

12. The computing device of claim 11, wherein the processing circuitry is configured to:
perform the determination and the presentation of the summary based on the in-house HPC environment not having sufficient computing capacity available to complete the computing job and fulfill the urgency request; and
based on the in-house HPC environment having sufficient computing capacity available to complete the computing job and fulfill the urgency request, automatically allocate the computing job to the in-house HPC environment.

13. The computing device of claim 11 or 12, wherein:
to determine the extent to which the plurality of HPC environments can perform the computing job and fulfill the urgency request, the processing circuitry is configured to poll the plurality of HPC environments; and
the summary includes a ranking of the plurality of HPC environments based on an extent to which the plurality of HPC environments can complete the computing job according to the urgency request and based on cost;
and/or
wherein the processing circuitry is configured to:
determine a set of computing resources required for performing the computing job, which includes receiving a description of the set of computing resources required for the computing job as part of the computing job request; and
determine the summary based on the determined set of computer resources required;
and/or
wherein the processing circuitry is configured to:
determine a set of computing resources required for performing computing job, which includes estimating the set of computing resources required for the computing job based on the computing job request; and
determine the summary based on the estimated set of computer resources required.

14. The computing device of any of claims 11 to 13, wherein the computing job request includes one or more of the following:
a number of computing cores needed for the computing job;
a type of computing core needed for the computing job;
an amount of memory needed for the computing job;
an estimated length of the computing job;
an amount of data storage needed for the computing job; and
an amount data transfer needed for uploading the input data to the HPC environment and for downloading output data of the computing job from the HPC environment;
and/or
wherein:
the computing job request includes a data locality requirement indicating one or more geographic restrictions on transfer of data associated with the computing job; and
the processing circuitry is configured to, based on the data locality requirement, exclude an HPC environment that is unable to comply with the data locality requirement from the summary.

15. The computing device of any of claims 11 to 14, wherein the summary includes a plurality of configurations for at least one of the third-party HPC environments that vary in terms of estimated completion date;
and/or
wherein the processing circuitry is configured to:
utilize a machine learning algorithm trained with historical data of computing jobs performed by one of the plurality of HPC environments to predict future availability of computing resources at said one of the plurality of HPC environments;
and/or
wherein for each of at least one of the plurality of HPC environments that can perform the computing job but cannot also fulfill the urgency request, the summary includes a best effort option for the HPC environment that indicates an earliest time the computing job could be completed by the HPC environment.
